# EUROPÄISCHE PATENTSCHRIFT

(11) **EP 3 749 488 B1**
(45) Veröffentlichungstag und Bekanntmachung des Hinweises auf die Patenterteilung: **04.01.2023**
(21) Anmeldenummer: 19702896.2
(22) Anmeldetag: 01.02.2019
(51) Int. Cl.: F16B 13/08, B25B 31/00, F16B 13/06

(54) **SETZGERÄT FÜR EINEN SPREIZANKER**
FASTENER DRIVING TOOL FOR AN EXPANSION ANCHOR
APPAREIL DE POSE POUR ÉLÉMENT D'ANCRAGE À EXPANSION

(30) Priorität: 09.02.2018 DE 102018102900; 10.01.2019 DE 102019100465
(43) Veröffentlichungstag der Anmeldung: 16.12.2020
(73) Patentinhaber: fischerwerke GmbH & Co. KG, 72178 Waldachtal (DE)
(72) Erfinder: HUSS, Rainer, 72285 Pfalzgrafenweiler (DE); KLATT, Simeon, 99880 Neufrankenroda, Metebach (DE)
(86) Internationale Anmeldenummer: PCT/EP2019/052457
(87) Internationale Veröffentlichungsnummer: WO 2019/154722

(56) Entgegenhaltungen:
- EP-A2- 0 427 664
- DE-A1-102013 112 424

## Beschreibung

Die Erfindung betrifft ein Setzgerät für einen Spreizanker mit den Merkmalen des Oberbegriffs des Anspruchs 1.

Das erfindungsgemäße Setzgerät ist insbesondere zum Aufspreizen eines Hinterschnitt-Spreizankers in einem hinterschnittenen Sackloch als Ankerloch in einer Fassadenplatte oder dergleichen vorgesehen. Der Spreizanker weist einen Schaft mit einem Gewinde und einem Spreizkonus an einem Ende sowie ein Spreizelement auf. Das Spreizelement ist insbesondere eine Hülse, die auch geschlitzt oder Aussparungen aufweisen kann, oder ein wellenförmiger Ring, nachfolgend als "Wellenring" bezeichnet. Das Spreizelement ist auf dem Schaft angeordnet und wird zum Aufspreizen auf den Spreizkonus geschoben, wodurch sich das Spreizelement radial aufweitet und in die Hinterschneidung des Ankerlochs greift. Der Spreizanker ist durch Formschluss mit der Hinterschneidung des Ankerlochs gehalten, was auch als Verankerung des Spreizankers im Ankerloch aufgefasst werden kann. Die Befestigung kann zusätzlich auch kraftschlüssig durch Kontakt mit und radiales Drücken gegen eine Lochwand des Ankerlochs sein. Die Erfindung ist nicht auf den beschriebenen Hinterschnitt-Spreizanker oder eine Verankerung in Fassadenplatten beschränkt, sondern auch für andere, auch Nicht-Hinterschnitt-Spreizanker verwendbar.

Die Offenlegungsschrift DE 10 2013 112 424 A1 offenbart ein Setzgerät für einen solchen Spreizanker. Das Setzgerät weist ein drehbar an einem Widerlager gelagertes Verbindungsteil mit einem auf das Gewinde des Ankers schraubbaren Innengewinde als Gegengewinde für das Gewinde des Ankers auf. Das Widerlager des bekannten Setzgeräts umschließt das Verbindungsteil koaxial und stützt - über eine auf dem Schaft des Spreizankers angeordnete Distanzhülse - den das Spreizelement bildenden Wellenring axial ab. Eine Rechtsdrehung des Verbindungsteils zieht den Schaft des Spreizankers in das Innengewinde ein und schiebt über das Widerlager und die Distanzhülse den Wellenring auf den Spreizkonus des Spreizankers, wodurch der Wellenring radial aufgeweitet wird, was als Aufspreizen des das Spreizelement bildenden

Wellenrings bzw. des Spreizankers aufgefasst werden kann. Die EP 0 427 664 A2 zeigt ein Setzgerät nach dem Oberbegriff von Anspruch 1.

Aufgabe der Erfindung ist, ein Setzgerät der vorstehend erläuterten Art vorzuschlagen, das ein Spreizelement eines Spreizankers auch dann aufspreizt, wenn der Spreizanker nicht gegen Drehen gehalten ist.

Diese Aufgabe wird erfindungsgemäß durch die Merkmale des Anspruchs 1 gelöst. Ebenso wie das bekannte Setzgerät weist das erfindungsgemäße Setzgerät mit den Merkmalen des Anspruchs 1 ein Gegengewinde für ein Gewinde eines Schafts eines Spreizankers und ein Widerlager zu einem axialen Abstützen eines auf dem Schaft des Spreizankers angeordneten Spreizelements auf. Das Gegengewinde ist vorzugsweise drehbar in Bezug zum Widerlager, allerdings ist ein zum Widerlager drehfestes Gegengewinde nicht ausgeschlossen. "Axial" bezieht sich auf das Gegengewinde des Setzgeräts. "Axiales Abstützen" bedeutet nicht, dass das Widerlager das Spreizelement in der Achse des Gegengewindes abstützt, sondern dass das Widerlager das Spreizelement gegen eine Bewegung axial zum Gegengewinde des Setzgeräts, und zwar in einer Richtung abstützt, die ein Aufschieben des Spreizelements auf einen Spreizkonus am Schaft des Spreizankers bewirkt. Dazu kann das Widerlager das Spreizelement auch exzentrisch außerhalb des Gegengewindes abstützen.

Außerdem weist das erfindungsgemäße Setzgerät einen Gewindetrieb auf, der eine drehende Antriebsbewegung in eine axiale Bewegung wandelt. Der Gewindetrieb ist vorzugsweise koaxial zum Gegengewinde, denkbar sind allerdings auch Ausführungen mit Radialversatz und/oder Winkelversatz. Beispiele solcher Gewindetriebe sind Gleitgewindetriebe mit beispielsweise einer Mutter oder einer Innengewindehülse auf einer Spindel oder Wälzgewindetriebe wie beispielsweise Kugelgewindetriebe, Rollengewindetriebe oder Planetenrollengewindetriebe. Die Aufzählung ist beispielhaft und nicht abschließend. Der Gewindetrieb des erfindungsgemäßen Setzgeräts verbindet das Gegengewinde drehbar und axialbeweglich mit dem Widerlager. Der Gewindetrieb wandelt einen Drehantrieb eines drehend antreibbaren Teils des Gewindetriebs in eine Axialbewegung des Gegengewindes relativ zum Widerlager. Der Drehantrieb des drehend antreibbaren Teils des Gewindetriebs wird hier kurz auch als Drehantrieb des Gewindetriebs bezeichnet. Ist das Gewinde des Schafts des Spreizankers in das Gegengewinde eingeschraubt oder bei einem Innengewinde des Schafts des Spreizankers auf das Gegengewinde des Setzgeräts aufgeschraubt, bewegt ein Drehantrieb des Gewindetriebs den Schaft des Spreizankers axial in Bezug zum Widerlager. Bei einer Drehrichtung des Drehantriebs wird der Spreizkonus in das Spreizelement, das sich am Widerlager abstützt, eingezogen bzw. das Spreizelement auf den Spreizkonus aufgeschoben und das Spreizelement dadurch radial aufgeweitet, das heißt aufgespreizt.

Ein Vorteil der Erfindung ist, dass der Spreizanker, genau genommen sein Schaft mit dem Gewinde, beim Aufspreizen nicht gegen Mitdrehen gehalten werden muss. Das ist zu Beginn des Aufspreizens von Bedeutung, wenn sich der Spreizanker lose oder mit nur geringem Halt gegen Drehen im Ankerloch befindet.

Ein weiterer Vorteil der Erfindung ist, dass durch Aufspreizen des Spreizankers durch Drehantrieb des Gewindetriebs des Setzgeräts eine Steigung des Gewindetriebs das Aufspreizen bestimmt. Durch eine kleine Gewindesteigung des Gewindetriebs ist bei gegebenem Drehmoment eine große Axial- und Spreizkraft möglich oder auch umgekehrt durch eine große Gewindesteigung des Gewindetriebs ein schnelles Aufspreizen. Beim Setzen dreht sich insbesondere das Gegengewinde nach einem initialen Einschrauben des Spreizankers mit diesem mit. Nicht ausgeschlossen ist allerdings, dass sich während des Aufspreizens der Spreizanker weiter in das Gegengewinde einschraubt in Abhängigkeit von den Reibungsverhältnissen. In diesem Fall verändert sich der Spreizweg pro Umdrehung des Setzgeräts, insbesondere bei gegenläufigen Gewinden (Gegengewinde und Gewindetrieb) steigt die Geschwindigkeit.

Die Steigungen des Gegengewindes und des Gewindetriebs des erfindungsgemäßen Setzgeräts sind insbesondere so aufeinander abgestimmt, dass eine Rechtsdrehung des Gewindetriebs das Spreizelement des Spreizankers auf den Spreizkonus des Spreizankers schiebt bzw. den Spreizkonus in das Spreizelement zieht. Dadurch wird der Spreizanker bzw. sein Spreizelement durch einen rechtsdrehenden Drehantrieb des Gewindetriebs des Setzgeräts aufgespreizt.

Insbesondere weisen das Gegengewinde und der Gewindetrieb des erfindungsgemäßen Setzgeräts unterschiedliche Steigungen auf. Die Steigung ist ein Axialweg, den eine volle Umdrehung erzeugt. Unterschiedliche Steigungen des Gegengewindes und des Gewindetriebs ergeben selbst dann eine Axialbewegung, wenn sich nicht nur der Gewindetrieb dreht, sondern auch das Gegengewinde auf dem Gewinde des Schafts des Spreizankers. Unterschiedliche Steigungen sind durch entgegengesetzte Steigungen und/oder durch betragsmäßig unterschiedliche Steigungen möglich.

Es weisen das Gegengewinde und der Gewindetrieb entgegengesetzte Steigungen auf, die vorzugsweise so gewählt sind, dass eine Rechtsdrehung des Gewindetriebs das Aufspreizen des Spreizelements des Spreizankers bewirkt.

Vorzugsweise weist der Gewindetrieb ein Linksgewinde auf, so dass eine Rechtsdrehung beim Drehantrieb des Gewindetriebs das Spreizelement des Spreizankers auf den Spreizkonus des Spreizankers schiebt bzw. den Spreizkonus in das Spreizelement zieht und das Spreizelement aufspreizt. Das Gegengewinde ist ein Rechtsgewinde, wenn das Gewinde des Schafts des Spreizankers ein Rechtsgewinde ist, was üblicherweise der Fall ist.

Vorzugsweise weist der Gewindetrieb eine Axialwegbegrenzung auf, die den Axialweg begrenzt, so dass die Drehbewegung des Gewindetriebs gestoppt wird, bevor der Gewindetrieb durch die Drehbewegung auseinander geschraubt wird.

Eine Ausgestaltung der Erfindung sieht einen axial nachgiebigen Axialanschlag für den Gewindetrieb vor, der die Drehbewegung in einer Richtung, nämlich eine Rückdrehung bzw. Rückbewegung des Gewindetriebs in eine Ausgangslage nach einem Aufspreizen des Spreizankers nachgebend stoppt bzw. bis zum Stillstand bremst. Das verhindert ein Festziehen des Gewindetriebs durch einen Schwung drehend angetriebener Massen, der sich nur durch ein entsprechend hohes Losdrehmoment wieder lösen lassen würde. Die axiale Nachgiebigkeit des Axialanschlags ist insbesondere dadurch realisiert, dass der axial nachgiebige Axialanschlag ein elastisches Element umfasst oder dass das elastische Element den axial nachgiebigen Axialanschlag bildet. Vorzugsweise ist das elastische Element als ein gummielastischer O-Ring ausgestaltet. Der gummielastische O-Ring begünstigt eine kostengünstige und einfache Herstellung des erfindungsgemäßen Setzgeräts. Eine Ausgestaltung der Erfindung sieht eine Rückstellfeder für den Gewindetrieb des erfindungsgemäßen Setzgeräts vor, die den Gewindetrieb nach einer Drehung zurück in eine Ausgangslage beaufschlagt. Vorzugsweise beaufschlagt die Rückstellfeder den Gewindetrieb in eine Ausgangslage, von der aus der Spreizanker durch Drehantrieb des Gewindetriebs aufspreizbar ist. In der Ausgangslage kann die Rückstellfeder eine Vorspannung aufweisen, um eine Rückdrehung bis in die Ausgangslage sicher zu stellen.

Vorzugsweise umschließt das Widerlager das Gegengewinde, so dass es das Spreizelement konzentrisch zum Gegengewinde abstützt. Das Widerlager kann das Spreizelement auf einem geschlossenen Umfang oder auch an einzelnen Umfangsstellen außerhalb des Gegengewindes abstützen, die in Umfangsrichtung gleich- oder ungleichmäßig verteilt angeordnet sind. Das Widerlager und das Gegengewinde können axial versetzt zueinander angeordnet sein.

Zur Handhabung bzw. wegen einer Haptik sieht eine Ausgestaltung der Erfindung eine gummielastische Ummantelung des Widerlagers aus einem Elastomer vor. Zum Schutz eines Ankergrunds, in dem der Spreizanker verankert wird, also beispielsweise zum Schutz einer Fassadenplatte, sieht eine Ausgestaltung der Erfindung eine gummielastische Unterlage des Widerlagers oder eines sonstigen Teils des Setzgeräts, das beim Aufspreizen des Spreizankers mit dem Ankergrund in Berührung kommt, aus einem Elastomer vor. Die Unterlage befindet sich zwischen dem Widerlager und/oder dem sonstigen Teil des Setzgeräts, das dadurch beim Aufspreizen des Spreizankers nicht unmittelbar mit dem Ankergrund in Berührung kommt. Das Setzgerät kann ein Teil aus einem Elastomer aufweisen, das sowohl das Widerlager ummantelt als auch die Unterlage bildet.

Eine Ausgestaltung der Erfindung sieht einen Werkzeugsitz des drehend antreibbaren Teils des Gewindetriebs zu einem drehfesten Ansetzen eines Drehwerkzeugs vor. Der Werkzeugsitz kann beispielsweise zylindrisch oder konisch zu einem reibschlüssigen Ansetzen eines Drehwerkzeugs oder mehreckig, insbesondere drei-, vier- oder sechseckig zu einem formschlüssigen Ansetzen eines Drehwerkzeugs sein. Als Drehwerkzeug ist ein Akkuschrauber mit einem Dreibackenfutter verwendbar, das an einem zylindrischen Werkzeugsitz kraftschlüssig oder an einem Sechskant kraft- und formschlüssig ansetzbar ist. Andere Werkzeugsitze sind möglich.

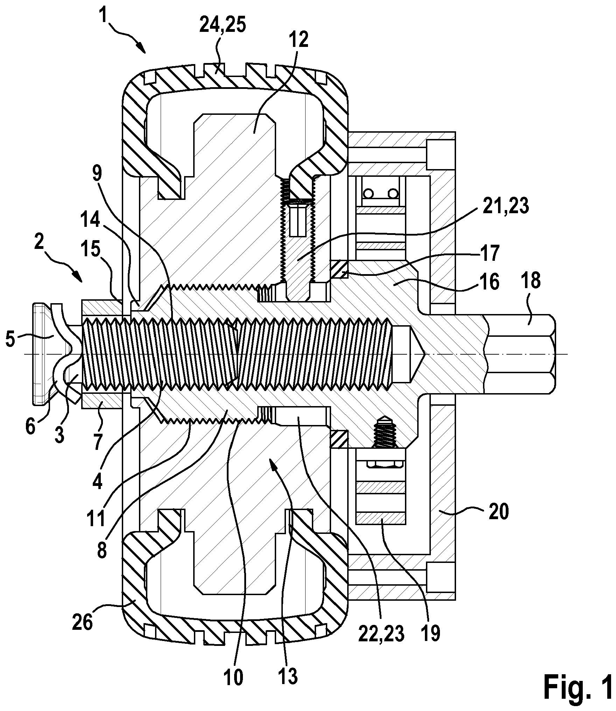

Die Erfindung wird nachfolgend anhand eines in der Zeichnung dargestellten Ausführungsbeispiels näher erläutert. Die einzige Figur zeigt ein Ausführungsbeispiel eines erfindungsgemäßen Setzgeräts in einem Achsschnitt.

Das in der Zeichnung dargestellte, erfindungsgemäße Setzgerät 1 ist zum Aufspreizen und Verankern eines Spreizankers 2 in einem hinterschnittenen Ankerloch in einer nicht dargestellten Fassadenplatte vorgesehen. Das Ankerloch ist ein zylindrisches Sackloch mit einer konischen Aufweitung an einem Lochgrund, die eine Hinterschneidung des Ankerlochs bildet. Der Spreizanker 2 weist einen zylindrischen Schaft 3 mit einem Gewinde 4 und einem Spreizkonus 5 an einem Ende des Schafts 3 und einen auf dem Schaft 3 angeordneten Wellenring als Spreizelement 6 auf. Der Wellenring ist im Ausführungsbeispiel ein in Umfangsrichtung wellenförmig verlaufender Drahtring. Außerdem ist auf einer dem Spreizkonus 5 abgewandten Seite des das Spreizelement 6 bildenden Wellenrings eine Distanzhülse 7 auf dem Schaft 3 angeordnet.

Das Setzgerät 1 weist ein durchmessergestuftes, zylinderstabförmiges Verbindungsteil 8 mit einem koaxialen Sackloch mit einem zum Gewinde 4 des Schafts 3 des Spreizankers 2 komplementären Innengewinde als Gegengewinde 9 auf, das auf das Gewinde 4 schraubbar ist, um den Schaft 3 des Spreizankers 2 mit dem Verbindungsteil 8 des erfindungsgemäßen Setzgeräts 1 zu verbinden. Im Ausführungsbeispiel sind das Gewinde 4 und das Gegengewinde 9 Rechtsgewinde.

Das Verbindungsteil 8 weist ein Außengewinde 10 auf, mit dem es in ein Innengewinde 11 eines Grundteils 12 des Setzgeräts 1 geschraubt ist. Das Grundteil 12 ist im Ausführungsbeispiel ein axial kurzer Zylinder, der axial ungefähr halb so lang ist wie sein Durchmesser. Das Grundteil 12 weist ein durchgehendes Axialloch mit dem Innengewinde 11 auf. Das Grundteil 12 mit dem Innengewinde 11 und das Verbindungsteil 8 mit dem Außengewinde 10 bilden einen Gewindetrieb 13, der eine drehende Antriebsbewegung des Verbindungsteils 8 in eine Axialbewegung des Verbindungsteils 8 mit dem Gegengewinde 9 für das Gewinde 4 des Schafts 3 des Spreizankers 2 relativ zum Grundkörper 12 wandelt.

Auf einer Stirnseite, die sich auf der Seite einer Mündung des das Gegengewinde 9 aufweisenden, koaxialen Sacklochs des Verbindungsteils 8 befindet, weist das Grundteil 12 einen das Sackloch und damit das Gegengewinde 9 umschließenden, niedrigen, kreisringförmigen Kragen 14 auf, der von der Stirnseite des Grundteils 12 absteht und dessen Stirnfläche ein das Gegengewinde 9 umschließendes Widerlager 15 für das Spreizelement 6 des Spreizankers 2 bildet. Möglich ist auch eine Ausführung des Grundteils 12 ohne den Kragen 14, so dass die Stirnseite des Grundteils 12 das Widerlager bildet (nicht dargestellt).

An einer dem Widerlager 15 abgewandten Stirnseite des Grundteils 12 weist das Verbindungsteil 8 einen zylindrischen, umlaufend radial überstehenden Bund als Axialanschlag 16 auf, der einen Axialweg des Verbindungsteils 8 relativ zum Grundteil 12 durch Anlage an der Stirnseite des Grundteils 12 begrenzt. Ein gummielastischer O-Ring 17, der auf einer dem Grundteil 12 zugewandten Stirnseite des Axialanschlags 16 angeordnet ist, sorgt für eine axiale Nachgiebigkeit des Axialanschlags 16.

Auf einer der Mündung des axialen Sacklochs des Verbindungsteils 8 abgewandten Seite des Axialanschlags 16 weist das Verbindungsteil 8 einen koaxialen Sechskantzapfen als Werkzeugsitz 18 zum Einspannen in ein nicht dargestelltes Dreibackenfutter eines nicht dargestellten Akkuschraubers auf. Ein Drehantrieb des Verbindungsteils 8 relativ zum Grundteil 12 bewirkt eine Axialbewegung des Verbindungsteils 8 mit dem Gegengewinde 9 relativ zum Grundteil 12. Im Ausführungsbeispiel sind das Außengewinde 10 und das Innengewinde 11 Linksgewinde, so dass sich bei einer Rechtsdrehung des Verbindungsteils 8 relativ zum Grundteil 12 das Verbindungsteil 8 mit dem Gegengewinde 9 axial zu der Stirnseite des Grundteils 12 bewegt, die dem Widerlager 15 abgewandt ist. Der den Axialanschlag 16 bildende Bund des Verbindungsteils 8 entfernt sich bei der Rechtsdrehung des Verbindungsteils 8 von der dem Widerlager 15 abgewandten Stirnseite des Grundteils 12. Der Drehantrieb des Verbindungsteils 8 kann auch als Drehantrieb des Gewindetriebs 13 aufgefasst werden.

An dem den Axialanschlag 16 bildenden Bund ist das Verbindungsteil 8 von einer Spiral-Blattfeder umschlossen, die eine Rückstellfeder 19 des erfindungsgemäßen Setzgeräts 1 bildet. Ein inneres Ende der Rückstellfeder 19 ist am Axialanschlag 16 des Verbindungsteils 8 und ein äußeres Ende am Grundteil 12 festgelegt. In der dargestellten Ausgangslage des erfindungsgemäßen Setzgeräts 1, in der der Axialanschlag 16 mit dem O-Ring 17 an der Stirnseite des Grundteils 12 anliegt, weist die Rückstellfeder 19 eine Vorspannung auf, die das Verbindungsteil 8 mit einem linksdrehenden Moment beaufschlagt. Das bedeutet, dass in der Ausgangslage die Vorspannung der Rückstellfeder 19 den Axialanschlag 16 des Verbindungsteils 8 gegen die Stirnseite des Grundteils 12 beaufschlagt.

Die Rückstellfeder 19 ist in einem hohlzylindrischen Gehäuse 20 untergebracht, das auf der dem Widerlager 15 abgewandten Stirnseite des Grundteils 12 angeordnet ist.

In das Grundteil 12 ist radial eine Madenschraube 21 geschraubt, die in eine umlaufende Nut 22 des Verbindungsteils 8 greift, die sich von einem Ende des Außengewindes 10 bis zum Axialanschlag 16 des Verbindungsteils 8 erstreckt. Die in die Nut 22 greifende Madenschraube 21 und die Nut 22 bilden eine Axialwegbegrenzung 23, die die Axialbewegung des Verbindungsteils 8 relativ zum Grundteil 12 und damit des Gewindetriebs 13 begrenzt.

Das Grundteil 12 weist ein gummielastisches Griffelement 24 in Form eines Reifens aus einem Elastomer auf, dessen Außenfläche eine Ummantelung 25 des Grundteils 12 und damit des Widerlagers 15 und dessen eine Flanke eine Unterlage 26 bildet. Die Unterlage 26 steht axial über die Stirnseite des Grundteils 12 über und befindet sich beim Verankern des Spreizankers 2 in dem hinterschnittenen Ankerloch in der nicht dargestellten Fassadenplatte zwischen dem Grundteil 12 und der Fassadenplatte und schützt die Fassadenplatte vor einer Beschädigung durch das Grundteil 12.

Zur Verankerung des Spreizankers 2 in der nicht dargestellten Fassadenplatte wird das Gewinde 4 des Schafts 3 des Spreizankers 2 in das Gegengewinde 9 im Verbindungsteil 8 des erfindungsgemäßen Setzgeräts 1 geschraubt. Anschließend wird der axial mit seinem Spreizkonus 5 und dem Spreizelement 6 aus dem Setzgerät 1 vorstehende Spreizanker 2 in das hinterschnittene Ankerloch in der nicht dargestellten Fassadenplatte eingebracht, so dass sich der Spreizkonus 5 in der konischen Hinterschneidung des Ankerlochs befindet.

Zum Aufspreizen wird das Verbindungsteil 8 rechtsdrehend angetrieben und bewegt sich aufgrund der entgegengesetzten Steigung des Gewindetriebs 13, der ein Linksgewinde aufweist, axial so, dass sich der Axialanschlag 16 vom Grundteil 12 entfernt. Dabei stützt sich die Distanzhülse 7, die auf dem Schaft 3 des Spreizankers 2 angeordnet ist, am Widerlager 15 des Setzgeräts 1 ab und schiebt den Wellenring, der das Spreizelement 6 bildet, auf den Spreizkonus 5. Dabei weitet der Spreizkonus 5 das Spreizelement 6 radial auf, was als Aufspreizen aufgefasst werden kann. Das Spreizelement 6 gelangt in die Hinterschneidung des Ankerlochs in der Fassadenplatte, so dass der Spreizanker 2 im Ankerloch gehalten ist, was als Verankerung des Spreizankers 2 in der Fassadenplatte aufgefasst werden kann. Die Verankerung ist formschlüssig durch den Hintergriff des aufgespreizten Spreizelements 6 in der Hinterschneidung des Ankerlochs.

Wenn der Spreizanker 2 aufgespreizt ist, wird zum Lösen des Setzgeräts 1 vom Spreizanker 2 die Drehrichtung umgekehrt und das Setzgerät 1 vom Gewinde 4 des Schafts 3 des Spreizankers 2 abgeschraubt. Die Rückstellfeder 19, die beim Aufspreizen des Spreizankers 2 gespannt wird, stellt sicher, dass das Setzgerät 1 vollständig in seine Ausgangslage, in der der Axialanschlag 16 an der Stirnseite des Grundteils 12 anliegt, zurückgestellt wird, falls der Antrieb mit der umgekehrten Drehrichtung das Setzgerät 1 nicht vollständig in die Ausgangslage zurückgestellt hat. Der durch den gummielastischen O-Ring 17 axial nachgiebige Axialanschlag 16 verhindert ein Festziehen des Verbindungsteils 8 am Grundkörper 12 aufgrund drehender Massen, wenn das Verbindungsteil 8 mit Schwung in die Ausgangslage zurückgedreht wird.

### Bezugszeichenliste

### Setzgerät für einen Spreizanker

- 1: Setzgerät
- 2: Spreizanker
- 3: Schaft
- 4: Gewinde
- 5: Spreizkonus
- 6: Spreizelement
- 7: Distanzhülse
- 8: Verbindungsteil
- 9: Gegengewinde
- 10: Außengewinde
- 11: Innengewinde
- 12: Grundteil
- 13: Gewindetrieb
- 14: Kragen
- 15: Widerlager
- 16: Axialanschlag
- 17: O-Ring
- 18: Werkzeugsitz
- 19: Rückstellfeder
- 20: Gehäuse
- 21: Madenschraube
- 22: Nut
- 23: Axialwegbegrenzung
- 24: Griffelement
- 25: Ummantelung
- 26: Unterlage

## Patentansprüche

1. Setzgerät für einen Spreizanker (2), der einen Schaft (3) mit einem Gewinde (4), einem Spreizkonus (5) und einem Spreizelement (6) aufweist, das durch Aufschieben auf den Spreizkonus (5) aufspreizbar ist, wobei das Setzgerät (1) ein Gegengewinde (9) für das Gewinde (4) des Schafts (3) des Spreizankers (2) und ein Widerlager (15) zu einem axialen Abstützen des Spreizelements (6) des Spreizankers (2) aufweist, wobei das Setzgerät (1) einen Gewindetrieb (13) aufweist, der das Gegengewinde (9) drehbar und axialbeweglich mit dem Widerlager (15) verbindet, so dass ein Drehantrieb des Gewindetriebs (13) eine Axialbewegung des Gegengewindes (9) relativ zum Widerlager (15) erzeugt, **dadurch gekennzeichnet, dass** das Gegengewinde (9) und der Gewindetrieb (13) entgegengesetzte Steigungen aufweisen.

2. Setzgerät nach Anspruch 1, **dadurch gekennzeichnet, dass** die Steigungen des Gegengewindes (9) und des Gewindetriebs (13) so aufeinander abgestimmt sind, dass eine Rechtsdrehung des Gewindetriebs (13) das Spreizelement (6) des Spreizankers (2) auf den Spreizkonus (5) des Spreizankers (2) schiebt.

3. Setzgerät nach Anspruch 1 oder 2, **dadurch gekennzeichnet, dass** das Gegengewinde (9) und der Gewindetrieb (13) unterschiedliche Steigungen aufweisen.

4. Setzgerät nach einem oder mehreren der vorhergehenden Ansprüche, **dadurch gekennzeichnet, dass** das Gegengewinde (9) ein Rechtsgewinde ist und/oder der Gewindetrieb (13) ein Linksgewinde aufweist.

5. Setzgerät nach einem oder mehreren der vorhergehenden Ansprüche, **dadurch gekennzeichnet, dass** der Gewindetrieb (13) eine Axialwegbegrenzung (23) aufweist.

6. Setzgerät nach einem oder mehreren der vorhergehenden Ansprüche, **dadurch gekennzeichnet, dass** das Setzgerät (1) einen axial nachgiebigen Axialanschlag (16) für den Gewindetrieb (13) aufweist, wobei der axial nachgiebige Axialanschlag (16) ein elastisches Element umfasst oder dass das elastische Element den axial nachgiebige Axialanschlag (16) bildet.

7. Setzgerät nach Anspruch 6, **dadurch gekennzeichnet, dass** das elastische Element ein gummielastischer O-Ring (17) ist.

8. Setzgerät nach einem oder mehreren der vorhergehenden Ansprüche, **dadurch gekennzeichnet, dass** das Setzgerät (1) eine Rückstellfeder (19) für den Gewindetrieb (13) aufweist, die den Gewindetrieb (13) nach einer Drehung in eine Ausgangslage zurück beaufschlagt.

9. Setzgerät nach einem oder mehreren der vorhergehenden Ansprüche, **dadurch gekennzeichnet, dass** das Widerlager (15) das Gegengewinde (9) umschließt.

10. Setzgerät nach einem oder mehreren der vorhergehenden Ansprüche, **dadurch gekennzeichnet, dass** das Widerlager (15) eine Ummantelung (25) und/oder Unterlage (26) aus einem Elastomer aufweist.

11. Setzgerät nach einem oder mehreren der vorhergehenden Ansprüche, **dadurch gekennzeichnet, dass** der Gewindetrieb (13) einen Werkzeugsitz (18) zu einem drehfesten Ansetzen eines Drehwerkzeugs aufweist.

## Claims

1. Setting device for an expansion anchor (2) which has a shank (3) having a thread (4), an expander cone (5) and an expansion element (6) which is expansible by being pushed onto the expander cone (5), wherein the setting device (1) has a counter-thread (9) for the thread (4) of the shank (3) of the expansion anchor (2) and a counter-bearing (15) for axially supporting the expansion element (6) of the expansion anchor (2), wherein the setting device (1) has a screw drive (13) which connects the counter-thread (9) rotatably and axially movably to the counter-bearing (15), so that a rotational drive of the screw drive (13) generates an axial movement of the counter-thread (9) relative to the counter-bearing (15), **characterised in that** the counter-thread (9) and the screw drive (13) have opposite pitches.

2. Setting device according to claim 1, **characterised in that** the pitches of the counter-thread (9) and the screw drive (13) are matched to one another so that clockwise rotation of the screw drive (13) pushes the expansion element (6) of the expansion anchor (2) onto the expander cone (5) of the expansion anchor (2).

3. Setting device according to claim 1 or 2, **characterised in that** the counter-thread (9) and the screw drive (13) have different pitches.

4. Setting device according to one or more of the preceding claims, **characterised in that** the counter-thread (9) is a right-hand thread and/or the screw drive (13) has a left-hand thread.

5. Setting device according to one or more of the preceding claims, **characterised in that** the screw drive (13) has an axial travel limiter (23).

6. Setting device according to one or more of the preceding claims, **characterised in that** the setting device (1) has an axially resilient axial stop (16) for the screw drive (13), wherein the axially resilient axial stop (16) comprises a resilient element; or the resilient element forms the axially resilient axial stop (16).

7. Setting device according to claim 6, **characterised in that** the resilient element is a rubber-elastic O-ring (17).

8. Setting device according to one or more of the preceding claims, **characterised in that** the setting device (1) has a restoring spring (19) for the screw drive (13), which restoring spring urges the screw drive (13) back into a starting position after a rotation.

9. Setting device according to one or more of the preceding claims, **characterised in that** the counter-bearing (15) surrounds the counter-thread (9).

10. Setting device according to one or more of the preceding claims, **characterised in that** the counter-bearing (15) has a covering (25) and/or padding (26) made of an elastomer.

11. Setting device according to one or more of the preceding claims, **characterised in that** the screw drive (13) has a tool seat (18) for attaching a rotary tool so as to be fixed against relative rotation.

## Revendications

1. Appareil de pose destiné à une pièce d'ancrage expansible (2) comportant un fût (3) muni d'un filetage (4), un cône d'écartement (5) et un élément déployable (6) pouvant être déployé par enfilement sur ledit cône d'écartement (5), l'appareil de pose (1) étant pourvu d'un filetage complémentaire (9) dévolu au filetage (4) du fût (3) de la pièce d'ancrage expansible (2), et d'une contre-butée (15) dédiée à un appui axial de l'élément déployable (6) de ladite pièce d'ancrage expansible (2), ledit appareil de pose (1) étant doté d'un mécanisme à filet (13) qui relie le filetage complémentaire (9) à la contre-butée (15) avec faculté de rotation et de mobilité axiale, de sorte qu'un entraînement en rotation dudit mécanisme à filet (13) engendre un mouvement axial dudit filetage complémentaire (9) par rapport à ladite contre-butée (15), **caractérisé par le fait que** le filetage complémentaire (9) et le mécanisme à filet (13) présentent des pas inversés.

2. Appareil de pose selon la revendication 1, **caractérisé par le fait que** les pas du filetage complémentaire (9) et du mécanisme à filet (13) sont mutuellement coordonnés de façon telle qu'une rotation dextrogyre dudit mécanisme à filet (13) pousse l'élément déployable (6) de la pièce d'ancrage expansible (2) sur le cône d'écartement (5) de ladite pièce d'ancrage expansible (2).

3. Appareil de pose selon la revendication 1 ou 2, **caractérisé par le fait que** le filetage complémentaire (9) et le mécanisme à filet (13) présentent des pas différents.

4. Appareil de pose selon l'une ou plusieurs des revendications précédentes, **caractérisé par le fait que** le filetage complémentaire (9) est un filetage à droite, et/ou le mécanisme à filet (13) présente un filetage à gauche.

5. Appareil de pose selon l'une ou plusieurs des revendications précédentes, **caractérisé par le fait que** le mécanisme à filet (13) comporte une limitation de courses axiales (23).

6. Appareil de pose selon l'une ou plusieurs des revendications précédentes, **caractérisé par le fait que** ledit appareil de pose (1) est muni d'une butée axiale (16) apte à céder axialement et dédiée au mécanisme à filet (13), laquelle butée axiale (16), apte à céder axialement, inclut un élément élastique ; ou **par le fait que** ledit élément élastique forme ladite butée axiale (16) apte à céder axialement.

7. Appareil de pose selon la revendication 6, **caractérisé par le fait que** l'élément élastique est une bague torique (17) douée de l'élasticité du caoutchouc.

8. Appareil de pose selon l'une ou plusieurs des revendications précédentes, **caractérisé par le fait que** ledit appareil de pose (1) est nanti d'un ressort de rappel (19) qui est dédié au mécanisme à filet (13) et qui, à l'issue d'une rotation, sollicite ledit mécanisme à filet (13) pour le ramener à une position initiale.

9. Appareil de pose selon l'une ou plusieurs des revendications précédentes, **caractérisé par le fait que** la contre-butée (15) entoure le filetage complémentaire (9).

10. Appareil de pose selon l'une ou plusieurs des revendications précédentes, **caractérisé par le fait que** la contre-butée (15) comporte un enrobage (25) et/ou une embase (26) en un élastomère.

11. Appareil de pose selon l'une ou plusieurs des revendications précédentes, **caractérisé par le fait que** le mécanisme à filet (13) est pourvu d'un siège (18) d'outil dévolu à l'engagement, avec verrouillage rotatif, d'un outil de mise en rotation.
